(19) **Europäisches Patentamt**
**European Patent Office**
**Office européen des brevets**

(11) **EP 4 306 483 A1**

(12) **EUROPEAN PATENT APPLICATION**
published in accordance with Art. 153(4) EPC

(43) Date of publication:
**17.01.2024 Bulletin 2024/03**

(21) Application number: **22766741.7**

(22) Date of filing: **14.02.2022**

(51) International Patent Classification (IPC):
*C01B 32/16* (2017.01)  *B01J 23/745* (2006.01)
*B01J 29/90* (2006.01)  *B82Y 40/00* (2011.01)
*C01B 32/164* (2017.01)

(52) Cooperative Patent Classification (CPC):
**B01J 23/745; B01J 29/90; B82Y 40/00;**
**C01B 32/16; C01B 32/164**

(86) International application number:
**PCT/JP2022/005724**

(87) International publication number:
**WO 2022/190776 (15.09.2022 Gazette 2022/37)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **10.03.2021 JP 2021038581**

(71) Applicant: **Zeon Corporation**
**Tokyo 100-8246 (JP)**

(72) Inventors:
• **SHIBUYA Akiyoshi**
**Tokyo 100-8246 (JP)**
• **KAWATA Keiichi**
**Tokyo 100-8246 (JP)**

(74) Representative: **Maiwald GmbH**
**Elisenhof**
**Elisenstraße 3**
**80335 München (DE)**

(54) **METHOD AND DEVICE FOR PRODUCING CARBON NANOTUBE AGGREGATE**

(57)    The purpose of the present invention is to provide a method and an apparatus for producing carbon nanotube aggregates to improve the contact efficiency between a source gas and catalysts, thereby enabling the efficient production of high-quality CNT aggregates. A method for producing carbon nanotube aggregates according to the disclosure is a method including a growth step of growing the carbon nanotube aggregates on substrates with catalysts on surfaces. In the growth step, a source gas supply step of forming a substrate layer by stacking the substrates at a lower portion of a growth furnace configured to perform the growth step, and supplying a source gas to the substrate layer through a plurality of gas injection ports arranged at the lower portion of the growth furnace, and an in-growth furnace stir and conveyance step of mechanically stirring and/or conveying the substrate layer are performed at least in part in an overlapping manner.

*FIG. 1*

EP 4 306 483 A1

**Description**

TECHNICAL FIELD

This disclosure relates to a method and an apparatus for producing carbon nanotube aggregates.

BACKGROUND

In recent years, nanocarbon materials such as carbon nanotubes (hereinafter, also referred to as "CNTs") have attracted attention as materials with excellent electrical conductivity, thermal conductivity, and mechanical properties. While it is recognized that the nanocarbon materials can exhibit superior properties, the nanocarbon materials are generally more expensive than other materials due to high production costs.

Therefore, various attempts have been made for the purpose of efficient production of the nanocarbon materials. For example, Patent Literature (PTL) 1 discusses a method for producing nanocarbon, which includes continuously supplying hydrocarbons and catalysts with a screw feeder so that the hydrocarbons and the catalysts are in contact with each other in a countercurrent or counter-flow condition. Further, for example, Patent Literature (PTL) 2 discusses a method for producing nanocarbon, which includes stirring and moving catalytic bodies through a reaction tube including a catalytic activity zone, a nanocarbon synthesis zone, and a cooling zone using a conveyance means such as a belt conveyor.

In the production of carbon nanotubes using a source gas such as hydrocarbons and catalysts, improving the contact efficiency between the source gas and the catalysts improves carbon conversion efficiency and reduces the amount of source gas used. In addition, by improving the contact efficiency between the source gas and the catalysts, the amount of excess source gas in exhaust is reduced, and the adhesion of byproducts such as tar derived from the excess source gas to an exhaust pipe is reduced, thus enabling stable production over a long period of time during continuous production.

CITATION LIST

Patent Literature

PTL 1: JP 5285730 B2
PTL 2: JP 2011241104 A

SUMMARY

(Technical Problem)

Here, there is room for improvement with respect to the method for producing a nanocarbon material according to the above-described prior art, in terms of improvement in the contact efficiency between a source gas and catalysts, thereby further enhancing the quality and production efficiency of the obtained nanocarbon material.

It would be helpful to provide a method and an apparatus for producing carbon nanotube aggregates in which the contact efficiency between a source gas and catalysts is improved, thereby enabling the efficient production of the carbon nanotube aggregates with high quality.

(Solution to Problem)

The inventors have made a diligent study with the aim of solving the above problem. As a result, the inventors have newly found that in the production of CNT aggregates, in a growth step, forming a substrate layer by stacking substrates with catalysts on surfaces at a lower portion of a furnace and supplying a source gas to the substrate layer from a plurality of gas injection ports arranged at the lower portion of the growth furnace, while mechanically stirring and/or conveying the substrate layer, make it possible to improve the contact efficiency between the source gas and the catalysts, thereby enabling the efficient production of the CNT aggregates with high quality, and have completed the disclosure.

In other words, this disclosure aims to advantageously solve the above problem. A CNT aggregate production method according to this disclosure is a method for producing carbon nanotube aggregates, the method including a growth step of growing the carbon nanotube aggregates on substrates with catalysts on surfaces. In the growth step, a source gas supply step of forming a substrate layer by stacking the substrates at a lower portion of a growth furnace configured to perform the growth step, and supplying a source gas to the substrate layer through a plurality of gas injection ports arranged at the lower portion of the growth furnace, and an in-growth furnace stir and conveyance step of mechanically stirring and/or conveying the substrate layer are performed at least in part in an overlapping manner. According to this production method, the contact efficiency between the source gas and the catalysts is improved, thereby enabling the efficient production of the CNT aggregates with high quality.

The CNT aggregate production method according to this disclosure may include performing, before the growth step, a formation step of creating a reducing gas environment in an environment surrounding the catalysts and heating at least one of the catalysts or a reducing gas.

In the formation step,

a reducing gas supply step of forming a substrate layer by stacking the substrates at a lower portion of a formation furnace configured to perform the formation step, and supplying the reducing gas to the substrate layer through a plurality of gas injection ports arranged at the lower portion of the formation furnace, and an in-formation furnace stir and conveyance step of mechanically stirring and/or conveying the substrate layer

may be performed at least in part in an overlapping manner,
the formation furnace and the growth furnace may be the same furnace, and
the formation step and the growth step may be performed in the same furnace with switching an atmosphere in the furnace. According to this production method, the formation step and the growth step can be performed in a batch-type system, and the use of the single furnace brings the advantages of space and cost savings in production facilities. In addition, optimization is easy because wide condition ranges can be set for operating factors of each step.

The CNT aggregate production method according to the disclosure may include performing the formation step and the growth step with prevention of mixing gas environments in the steps with each other, while continuously conveying the substrates,
with the use of a production apparatus including:

a formation unit configured to realize the formation step of creating a reducing gas environment in an environment surrounding the catalysts and heating at least one of the catalysts or a reducing gas;
a growth unit configured to realize the growth step of creating a source gas environment in the environment surrounding the catalysts and heating at least one of the catalysts or the source gas to grow the carbon nanotube aggregates;
a connection portion configured to spatially connect between an inside space of a furnace of the formation unit and an inside space of a furnace of the growth unit;
a first stir and conveyance unit configured to stir and/or convey the substrates in the inside space of the furnace of the formation unit, and a second stir and conveyance unit configured to stir and/or convey the substrates in the inside space of the furnace of the growth unit, the first and second stir and conveyance units configured as a single common unit and/or separate units; and
a gas mixture prevention device configured to prevent the gases from mixing with each other between the inside space of the furnace the formation unit and the inside space of the furnace of the growth unit. According to this production method, the formation step and the growth step can be performed in a continuous system, which dramatically improves a production rate. Furthermore, it is easy to optimally design specifications of the apparatus separately for the formation step and for the growth step, and continuous step control is possible, so the steps can be easily stabilized compared to the batch-type. As a result, the quality of the obtained CNT aggregates and the production efficiency of the CNT aggregates can be further improved.

In the CNT aggregate production method according to the disclosure, in the in-growth furnace stir and conveyance step, mechanical stir and/or conveyance may be performed by rotation of a blade of a screw, a paddle, or a ribbon, or a combination of several of these.

In the CNT aggregate production method according to the disclosure, the source gas environment in the growth step is preferably an environment of high carbon concentration and preferably contains a catalyst activating material. In the growth step, CNTs are grown in the environment of high carbon concentration containing the catalyst activating material, which allows the CNTs to grow while maintaining catalytic activity for a long time, thereby further improving the quality of the obtained CNT aggregates and the production efficiency of the CNT aggregates.

In the CNT aggregate production method according to the disclosure, the source gas environment preferably contains ethylene and carbon dioxide as the catalyst activating material. By performing the growth step in such an environment, the quality of the obtained CNT aggregates and the production efficiency of the CNT aggregates can be further improved.

In the CNT aggregate production method according to the disclosure, each of the substrates is preferably a particle with an apparent density of 2.0 g/cm³ or more. When the substrates are the particles with an apparent density of 2.0 g/cm³ or more, the obtained CNT aggregates can be made longer.

The "apparent density" of a support refers to a mass per unit volume including voids (closed pores) when the support is a particle with voids inside. The "apparent density of the support" can be measured according to the pycnometer method.

In the CNT aggregate production method according to the disclosure, each of the substrates contains any one or more elements of Al, Si, and Zr. The use of the substrates containing one or more elements of Al, Si, and Zr can further improve the production efficiency of the CNT aggregates.

An apparatus for producing carbon nanotube aggregates according to the disclosure is an apparatus for producing carbon nanotube aggregates by growing the carbon nanotube aggregates on substrates with catalysts on surfaces, the apparatus including a growth unit including a growth furnace configured to form a substrate layer by stacking the substrates at a lower portion, a source gas injector including a plurality of gas injection ports arranged at the lower portion of the growth furnace, a source gas being supplied to the substrate layer through the gas injection ports, and a stir and conveyance unit configured to mechanically stir and/or convey the substrate layer. According to this production apparatus, the contact efficiency between the source gas and the catalysts is improved, thereby enabling the efficient production of the CNT aggregates with high quality.

The apparatus for producing the carbon nanotube aggregates according to this disclosure may be an apparatus configured to perform a formation step and a growth step in a single furnace while switching an atmosphere in the furnace, wherein

the growth furnace is a formation/growth furnace configured to be able to perform the formation step and the growth step in the single furnace while switching the atmosphere in the furnace,
the growth unit is a formation/growth unit configured to be able to perform the formation step and the growth step,
the formation/growth unit has a reducing gas injector including a gas injection port disposed in the formation/growth furnace, a reducing gas being supplied to the substrate layer through the gas injection port,
the reducing gas injector is a gas injector that is the same as or different from the source gas injector,
the formation step is a step of creating a reducing gas environment in an environment surrounding the catalysts by supplying the reducing gas through the gas injection port, and heating at least one of the catalysts or the reducing gas, and
the growth step is a step of switching an inside of the furnace to a source gas environment by supplying the source gas to the substrate layer through a plurality of gas injection ports arranged at a lower portion of the formation/growth furnace.

According to this production apparatus, the formation step and the growth step can be performed in the batch-type system, and the use of the single furnace brings the advantages of space and cost savings in production facilities. In addition, optimization is easy because wide condition ranges can be set for operating factors of each step.

The apparatus for producing carbon nanotube aggregates according to this disclosure may be an apparatus including:

a formation unit configured to realize a formation step in which a reducing gas environment is created in an environment surrounding the catalysts and at least one of the catalysts or a reducing gas is heated;
the growth unit configured to realize a growth step in which a source gas environment is created in the environment surrounding the catalysts and at least one of the catalysts or the source gas is heated to grow the carbon nanotube aggregates;
a connection portion configured to spatially connect between an inside space of a furnace of the formation unit and an inside space of a furnace of the growth unit;
a first stir and conveyance unit configured to stir and/or convey the substrates in the inside space of the furnace of the formation unit, and a second stir and conveyance unit configured to stir and/or convey the substrates in the inside space of the furnace of the growth unit, the first and second stir and conveyance units configured as a single common unit and/or separate units; and
a gas mixture prevention device configured to prevent the gases from mixing with each other between the inside space of the furnace the formation unit and the inside space of the furnace of the growth unit.

According to this production apparatus, the formation step and the growth step can be performed in a continuous system, which dramatically improves a production rate. Furthermore, it is easy to optimally design specifications of the apparatus separately for the formation step and the growth step, and continuous step control is possible, so the steps can be easily stabilized compared to the batch-type. As a result, the quality of the obtained CNT aggregates and the production efficiency of the CNT aggregates can be further improved.

In the apparatus for producing the carbon nanotube aggregates according to this disclosure, the stir and conveyance unit may include a screw, a paddle, or a ribbon, or a combination of several of these that is configured to stir and/or convey the substrates by rotation of a blade.

(Advantageous Effect)

According to the present disclosure, it is possible to provide a method and an apparatus for producing carbon nanotube aggregates in which the contact efficiency between a source gas and catalysts is improved, thereby enabling the efficient production of CNT aggregates with high quality.

BRIEF DESCRIPTION OF THE DRAWINGS

In the accompanying drawings:

FIG. 1 is a diagram for explaining a schematic configuration of an apparatus (batch-type) that can perform a CNT aggregate production method according to an embodiment of the disclosure;
FIG. 2 is a diagram for explaining a schematic configuration of an apparatus (continuous-type) that can perform a CNT aggregate production method according to another embodiment of the disclosure; and
FIG. 3 is a diagram for explaining a schematic configuration of an example of components of a gas mixture prevention device that can be provided in the apparatus described in FIG. 2.

DETAILED DESCRIPTION

Embodiments of the disclosure will be hereinafter described in detail with reference to the drawings. According to a method and an apparatus for producing carbon nanotube aggregates of the disclosure, the carbon nanotube aggregates can be produced with high efficiency. In the following description, based on the progression of processes from a formation step, to a growth step, an optional cooling step, and a separation step, previous operations or components of a production apparatus that performs such operations are described as "previous stage" operations or components, and later operations or components are described as "later stage" operations or components.

(Method for Producing Carbon Nanotube Aggregate)

The method for producing the carbon nanotube aggregates according to the disclosure includes the growth step of growing the carbon nanotube aggregates on substrates with catalysts on surfaces. In the growth step,

· a source gas supply step of forming a substrate layer by stacking the substrates at a lower portion of a growth furnace that performs the growth step, and supplying a source gas to the substrate layer through a plurality of gas injection ports arranged at the lower portion of the growth furnace, and
· an in-growth furnace stir and conveyance step of mechanically stirring and/or conveying the substrate layer

are performed at least in part in an overlapping manner. The method for producing the carbon nanotube aggregates according to the disclosure may further include the formation step (a step of creating a reducing gas environment in an environment surrounding the catalysts and heating at least one of the catalysts or a reducing gas) as a step to be performed before the growth step. Furthermore, the method of producing the carbon nanotube aggregates may further include a cooling step, a separation and recovery step, and/or a reuse step, as steps to be performed after the growth step. Details of these steps will be described below.

The form of the method for producing the carbon nanotube aggregates according to the disclosure includes "batch-type" and "continuous-type".

<Batch-type Production Method>

In one embodiment, the method for producing the carbon nanotube aggregates according to the disclosure may be a "batch-type" production method. The "batch-type" production method is a production method in which the formation step and the growth step are switched in one unit. Such a "batch-type" production method may be, for example, a method for producing carbon nanotube aggregates includes:

performing the formation step prior to the growth step,
wherein
in the formation step,

a reducing gas supply step of forming a substrate layer by stacking the substrates at a lower portion of a formation furnace that performs the formation step, and supplying a reducing gas to the substrate layer through a plurality of gas injection ports arranged at the lower portion of the formation furnace, and
an in-formation furnace stir and conveyance step of mechanically stirring and/or conveying the substrate layer

are performed at least in part in an overlapping manner,
the formation furnace and the growth furnace are the same furnace, and
the formation step and the growth step are performed in the same furnace with switching an atmosphere in the furnace.

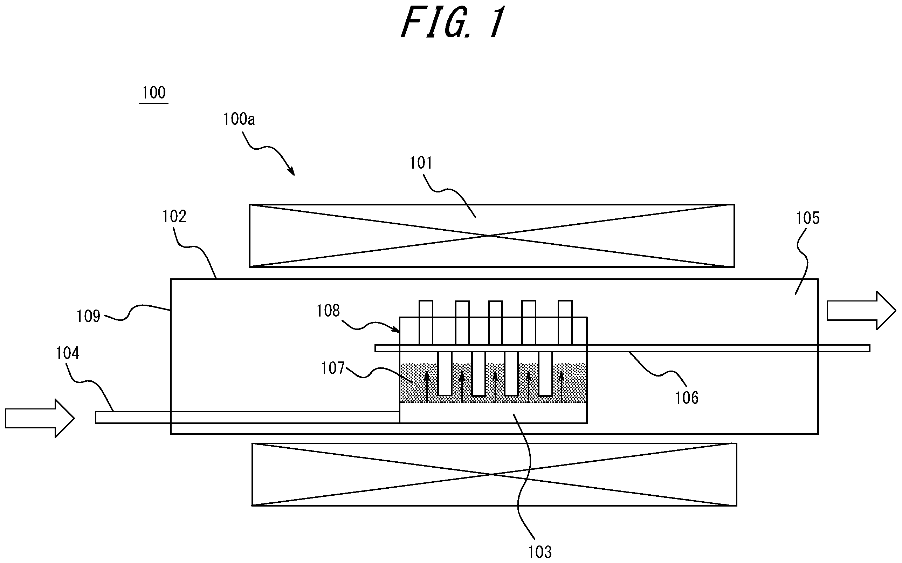

The "batch-type" production method may be performed, for example, using a "batch-type" production apparatus (FIG. 1) described below. The "batch-type" production method offers the advantages of space and cost savings in production facilities by using a single furnace. In addition, optimization is easy because wide condition ranges can be set for operating factors of each step.

<Continuous-type Production Method>

In another embodiment, the method for producing the carbon nanotube aggregates according to the disclosure may be a "continuous-type" production method. The "continuous-type" production method is a production method in which the formation step and the growth step are performed in separate units. Such a "continuous-type" production method may be, for example, a method that performs the formation step and the growth step while preventing gas environments in each step from mixing with each other, while continuously conveying the substrates, with the use of a CNT production apparatus having the following components:

· a formation unit that realizes the formation step of creating the reducing gas environment in the environment surrounding the catalysts and heating at least one of the catalysts or the reducing gas;
· a growth unit that realizes the growth step of creating the source gas environment in the environment surrounding the catalysts and heating at least one of the catalysts or the source gas to grow the carbon nanotube aggregates;
· a connection portion that spatially connects between an inside space of a furnace of the formation unit and an inside space of a furnace of the growth unit;
· a first stir and conveyance unit that stirs and/or conveys the substrates in the inside space of the furnace of the formation unit, and a second stir and conveyance unit that stirs and/or conveys the substrates in the inside space of the furnace of the growth unit, the first and second stir and conveyance units being configured as a single common unit and/or separate units; and
· a gas mixture prevention device that prevents the gases from mixing with each other between the inside space of the furnace the formation unit and the inside space of the furnace of the growth unit.

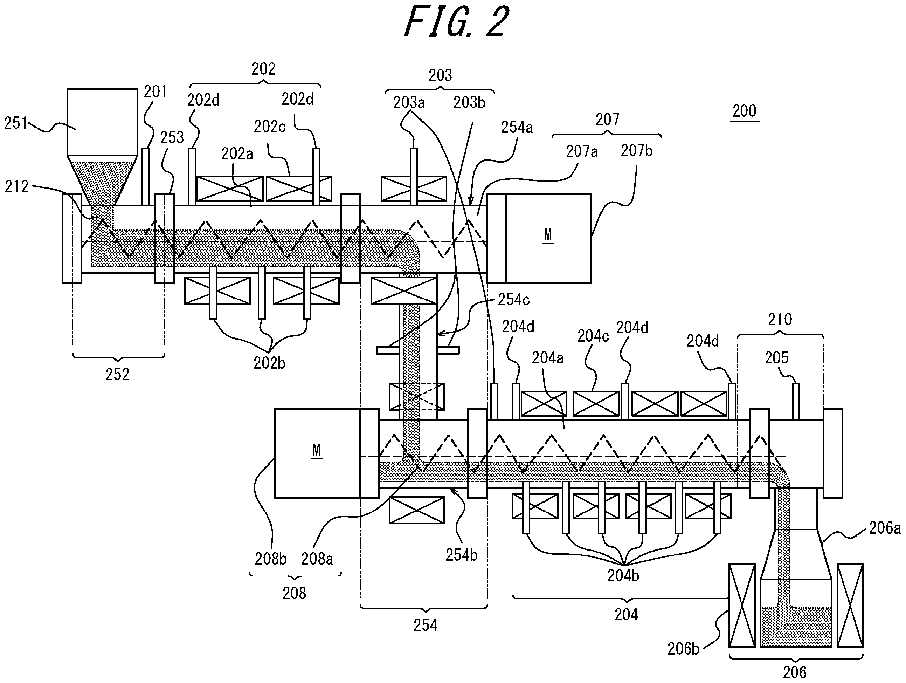

The "continuous-type" production method may be performed using, for example, a "continuous-type" production apparatus (FIG. 2) described later. According to the "continuous-type" production method, a production rate can be dramatically improved. Furthermore, it is easy to optimally design specifications of the apparatus separately for the formation step and the growth step, and continuous step control is possible, so the steps can be easily stabilized, compared to the batch-type. As a result, the quality of the obtained CNT aggregates and the production efficiency of the CNT aggregates can be further improved.

<Substrate with Catalyst on Surface>

Substrates that constitute the substrates with the catalysts on the surfaces, which are used in the production method according to the disclosure, can be formed by supporting the catalysts on the substrates.

«Substrate»

The substrate is a member capable of supporting a catalyst for synthesizing a CNT on its surface, and not limited in particular, a member made of any material can be used. In particular, the substrate is preferably made of a ceramic material containing any one or more elements of Al, Si, and Zr. Furthermore, the substrate is preferably made of a metal oxide containing any one or more elements of Al, Si, and Zr, and more preferably made of zirconium dioxide

($ZrO_2$). The shape of the substrate is preferably in the form of a particle having an aspect ratio of less than 5. The "aspect ratio" of the substrate particle can be obtained as the average of values of (a major axis/a width orthogonal to the major axis), which are calculated on a microscope image for a plurality of arbitrarily selected particles. Further, the apparent density of the substrate particle is preferably 2.0 g/cm$^3$ or more, preferably 3.8 g/cm$^3$ or more, more preferably 5.8 g/cm$^3$ or more, and preferably 8.0 g/cm$^3$ or less. When the apparent density of the substrate particles is the above-described lower limit or more, the obtained CNT aggregates can be made longer. When the apparent density of the substrate particles is the above-described upper limit or less, the substrate particles are easy to handle and the production efficiency of the CNT aggregates can be further improved. The particle diameter of the substrate particle is preferably 0.05 mm or more, more preferably 0.3 mm or more, preferably 10 mm or less, more preferably 2 mm or less, and even more preferably 1 mm or less. When the particle diameter of the substrate particles is the above-described lower limit or more, the obtained CNT aggregates can be made longer. When the particle diameter of the substrate particles is the above-described upper limit or less, the production efficiency of the CNT aggregates can be further improved. The "particle diameter" of the substrate particles means the volume-average particle diameter D50. The volume-average particle diameter D50 represents the particle diameter at which a cumulative volume calculated from the smallest diameter in particle size distribution (volume basis) measured by the laser diffraction method for the substrate particles is 50%. A deposit formed by the substrates stacked at the lower portion of the furnace by gravity or the like is referred to as the "substrate layer".

«Catalyst»

The catalyst supported on the substrate is not limited, and examples thereof include catalyst components such as nickel (Ni), iron (Fe), cobalt (Co), and molybdenum (Mo). In particular, the catalyst components preferably contain at least one metal of nickel (Ni), iron (Fe), cobalt (Co), or molybdenum (Mo) from the viewpoint of further increasing the production efficiency of the CNT aggregates.

In addition, as a base to support the catalyst on the substrate, for example, a base layer formed of a material such as aluminum oxide, titanium oxide, titanium nitride, silicon oxide, or the like can optionally be provided.

<<Method for Preparing Substrate with Catalyst on Surface>>

A method for supporting the catalyst on the surface of the substrate is not particularly limited, and any existing method can be adopted. In particular, in the case of using the substrate particles as the substrates, a way of using a rotary drum coating apparatus having a substantially cylindrical rotary drum is preferably adopted. Such a way includes a spraying step of, while stirring the substrate particles by disposing the substrates in a substantially cylindrical rotary drum and rotating the rotary drum with an inclined or horizontal axis as the axis of rotation, spraying a catalyst solution containing the above catalyst component to the stirred substrate particles, and a drying step of flowing a drying gas into the rotary drum to bring the drying gas into contact with the substrate particles to which the catalyst solution is sprayed. At least part of an implementation period of the stirring step overlaps with at least part of an implementation period of the spraying step. In a case in which the catalysts are supported after the base layers are disposed on the surfaces of the substrates, the substrate particles having the base layers on the surfaces can be obtained by, prior to spraying and drying the catalyst solution, performing the same spraying step and the drying step as described above using a solution containing a component that can constitute the base layers and the substrate particles. Thereafter, by subjecting the substrate particles having the base layers on the surfaces to the spraying step and the drying step described above, the substrate particles having the base layers and the catalysts supported in this order on the surfaces can be obtained.

As another method for preparing the substrates with the catalysts on the surfaces, in the case of using the substrate particles as the substrates, for example, there is a way including a step of spraying the catalyst solution while the substrate particles are centrifugally swirled and vertically suspended.

<Reducing Gas>

The reducing gas is a gas that has at least one of the following effects: reduction of the catalysts, promotion of particulation of the catalysts, or enhancement of catalytic activity. As the reducing gas, for example, hydrogen gas, ammonia, water vapor, or a mixture thereof can be applied. As the reducing gas, a mixed gas in which hydrogen gas is mixed with an inactive gas, such as helium gas, argon gas, or nitrogen gas, can also be used. The reducing gas is generally used in the formation step, but may be used in the growth step as appropriate.

<Source Gas>

Examples of the source gas used for synthesis of the CNT aggregates include hydrocarbons such as methane, ethane, ethylene, propane, butane, pentane, hexane, heptane propylene, and acetylene; lower alcohols such as methanol and ethanol; and oxygen-containing compounds with low carbon numbers such as acetone and carbon monoxide. A mixture of several of these can also be used. Moreover, the source gas may also be diluted with an inactive gas as described above.

Here, the source gas preferably contains ethylene. Heating ethylene within a predetermined temperature range (700°C or more and 900°C or less) accelerates the decomposition reaction of ethylene, and when the decomposition gas contacts the catalysts, fast growth of the CNTs is possible. However, when a thermal decomposition time is too long, the decomposition reaction of ethylene is too advanced, causing deactivation of the catalysts and deposition of carbon impurities on the CNT aggregates. In the CNT aggregate production method according to the disclosure, the thermal decomposition time is preferably in a range of 0.5 seconds or more and 10 seconds or less, for an ethylene concentration of 0.1 volume% to 40 volume%. When the thermal decomposition time is less than 0.5 seconds, the thermal decomposition of ethylene is insufficient and it is difficult to grow the CNT aggregates with high specific surface area at high speed. When the thermal composition time is more than 10 seconds, the decomposition of ethylene is too fast and too many carbon impurities are generated, causing catalyst deactivation and deterioration in the quality of the CNT aggregates. The thermal decomposition time can be calculated from the following equation:

$$\text{(Thermal decomposition time)} = \text{(Heated channel volume)}/\{\text{(Source gas flow rate)} \times (273.15+T)/273.15\}$$

Here, the heated channel volume is the volume of a channel, through which the source gas passes prior to contacting the catalysts, heated to a predetermined temperature T°C. The source gas flow rate is a flow rate at 0°C and 1 atm.

<Catalyst Activating Material>

A catalyst activating material may be added during the growth step of the CNTs. The addition of the catalyst activating material can further improve the production efficiency and quality of the CNT aggregates. The catalyst activating material used here is generally an oxygen-containing material that does not cause significant damage to the CNTs at a growth temperature. Examples of the catalyst activating material include, as well as water, hydrogen sulfide; oxygen-containing compounds with low carbon numbers, such as oxygen, ozone, nitrogen oxide, carbon monoxide, and carbon dioxide; alcohols, such as ethanol and methanol; ethers, such as tetrahydrofuran; ketones, such as acetone; aldehydes; esters; nitrogen oxide; and mixtures thereof. Among these, water, oxygen, carbon dioxide, carbon monoxide, or tetrahydrofuran is preferable, and carbon dioxide is more preferable. In the growth step, the CNTs are grown in an environment of high carbon concentration containing the catalyst activating material, which allows the CNTs to grow while maintaining catalytic activity for a long time, thereby further improving the quality of the obtained CNT aggregates and the production efficiency of the CNT aggregates. Furthermore, in a case in which the source gas contains ethylene, the presence of the carbon dioxide as the catalyst activating material further improves the quality of the obtained CNT aggregates and the production efficiency of the CNT aggregates. The reason for this is inferred to be as follows. First, in the CNT synthesis reaction, ethylene and carbon dioxide have been found to have relatively low activity as a carbon source and a catalyst activating material, respectively. Therefore, when a gas mixture containing each of the above gases passes through a layer constituted of the substrates with the catalysts on the surfaces, that is, a layer constituted of aggregate of the substrates continuously conveyed by screw rotation, decrease in concentration of each gas due to the CNT synthesis reaction is very slow, and the concentration distribution of each gas within the layer can be made relatively uniform. As a result, growth of the CNTs between the substrates is also made uniform, which enhances production efficiency.

In the case of the carbon dioxide, for example, the amount of the catalyst activating material added in the growth step is 0.5 volume% or more of an atmosphere in the growth step, preferably 4 volume% or more, more preferably 5 volume% or more, and generally 40 volume% or less.

<Environment of High Carbon Concentration>

The environment of high carbon concentration means an atmosphere in which the source gas accounts for 0.1 volume% or more of the atmosphere (hereinafter also referred to as "source gas environment") in the growth step. The percentage of the source gas in the environment of high carbon concentration can be, for example, 40 volume% or less. Furthermore, the percentage of the source gas in the environment of high carbon concentration is preferably 4 volume% or more, more preferably 5 volume% or more, even more preferably 10 volume% or more, and preferably 30 volume% or less. Here, the inclusion of the catalyst activating material in the source gas environment significantly enhances catalytic activity, so that even in the environment of high carbon concentration, the catalyst does not lose its activity.

Thus, the CNT aggregates can be grown for a long time at a significantly increased growth rate.

<Reaction Temperature>

The reaction temperature at which the CNT aggregates are grown is not particularly limited, and can be, for example, 400°C or more and 1100°C or less. Furthermore, in a case in which the source gas contains ethylene, the temperature is preferably 700°C or more and 900°C or less.

<Formation Step>

The formation step is a step of creating the reducing gas environment in the environment surrounding the catalysts supported by the substrates, and heating at least one of the catalysts or the reducing gas. The formation step is performed before the growth step described below. The formation step may be performed by implementing, at least in part in an overlapping manner,

· the reducing gas supply step of forming the substrate layer by stacking the substrates at the lower portion of the formation furnace that performs the formation step, and supplying the reducing gas to the substrate layer through the plurality of gas injection ports arranged at the lower portion of the formation furnace, and
· a stir and conveyance step of mechanically stirring and/or conveying the substrate layer. In this case, there may be a time when only the reducing gas supply step is performed, there may be a time when only the stir and conveyance step is performed, or the reducing gas supply step and the stir and conveyance step may all overlap. Considering the uniformity of the supplied gas, it is preferable that the reducing gas supply step at least overlaps with the stir and conveyance step, and it is more preferable that the reducing gas supply step and the stir and conveyance step all overlap. The mechanical stir and/or conveyance in the stir and conveyance step may be performed by rotation of a blade of a screw, a paddle, or a ribbon, or a combination of several of these. This step has at least one of the following effects: reduction of the catalysts, promotion of particulation of the catalysts in a state compatible with the growth of the CNTs, or enhancement of the catalytic activity.

In the formation step, the reducing gas can be supplied in any way into the inside space of the furnace of the formation unit, but it is preferable that, while substrate layer is formed by stacking the substrates at the lower portion of the formation furnace, the reducing gas is supplied to the substrate layer through the plurality of gas injection ports arranged at the lower portion of the formation furnace, in terms of improving the contact efficiency between the reducing gas and the substrates. At this time, it is preferable that the substrate layer is mechanically stirred and/or conveyed to further improve the contact efficiency between the reducing gas and the substrates. Reduction in the amount of reducing gas used and reduction in the duration of the formation step can be thereby expected, thus further improving the quality of the CNT aggregates and the production efficiency of the CNT aggregates.
The temperature of the catalyst-bearing supports or the reducing gas atmosphere in the formation step is preferably 400°C or more and 1100°C or less. The duration of the formation step can be 3 minutes or more and 120 minutes or less.

<Growth Step>

The growth step is a step of growing the CNT aggregates by creating the source gas environment in the environment surrounding the catalysts, which has become suitable for the production of the CNT aggregates by the above-described formation step, and heating at least one of the catalysts or the source gas.
The growth step is performed by implementing, at least in part in an overlapping manner,

· the source gas supply step of forming the substrate layer by stacking the substrates at the lower portion of the growth furnace that performs the growth step, and supplying the source gas to the substrate layer through the plurality of gas injection ports arranged at the lower portion of the growth furnace, and
· the stir and conveyance step of mechanically stirring and/or conveying the substrate layer.

In this case, there may be a time when only the source gas supply step is performed, there may be a time when only the stir and conveyance step is performed, or the source gas supply step and the stir and conveyance step may all overlap. Considering the uniformity of the supplied gas, it is preferable that the source gas supply step at least overlaps with the stir and conveyance step, and it is more preferable that the source gas supply step and the stir and conveyance step all overlap. The mechanical stir and/or conveyance in the stir and conveyance step may be performed by rotation of a blade of a screw, a paddle, or a ribbon, or a combination of several of these.

In the growth step, in the inside space of the furnace of the growth unit, while the substrate layer is formed by stacking the substrates at the lower portion of the growth furnace, the source gas is supplied to the substrate layer through the plurality of gas injection ports arranged at the lower portion of the growth furnace. By supplying the source gas in this manner, the source gas is supplied from under the substrate layer, so the contact efficiency between the source gas and the substrates is improved. Furthermore, since the substrate layer is mechanically stirred and/or conveyed, the contact efficiency between the source gas and substrates is further improved. Reduction in the amount of source gas used and reduction in the duration of the growth step can be thereby expected, thus further improving the quality of the CNT aggregates and the production efficiency of the CNT aggregates.

The total area of the gas injection ports is preferably designed so that a pressure loss generated when the gas passes through the injection ports is 1/10th or more, more preferably 3/10th or more, and even more preferably 1 times or more a pressure loss generated when the gas passes through the substrate layer formed at the lower portion of the growth furnace. This makes a gas flow rate injected from each injection port uniform and stabilized, and the quality of the produced CNT aggregates and the production efficiency of the CNT aggregates can be further improved.

The shape of the gas injection ports can be various shapes such as circular, elliptical, rectangular, or slit. From the viewpoint of processability, circular or slit shapes are preferable, and in the case of using the substrate particles as the substrates, slit shapes are preferable.

A supply rate of the source gas is preferably set so that the reciprocal of average time for the gas to pass through the substrate layer formed at the lower portion of the growth furnace is approximately the same or greater than a CNT synthesis reaction rate coefficient per volume of the substrate layer. Thereby, a CNT synthesis process becomes a reaction rate-limiting process, and optimum growth time can be almost the same when a reactor vessel is scaled up.

<Cooling Step>

Optionally, the cooling step can be performed after the growth step. In the cooling step, the CNT aggregates obtained in the growth step, the catalysts, and the substrates are cooled to an inactive gas atmosphere. Since the CNT aggregates, the catalysts, and the substrates after the growth step are in a high temperature condition, the CNT aggregates, the catalysts, and the substrates after the growth step tend to be oxidized when disposed in an oxygen-containing environment. Therefore, in an inactive gas environment, the aligned CNT aggregates, the catalysts, and the substrates are preferably cooled to 400°C or less, more preferably 200°C or less.

<Separation and Recovery Step>

In the separation and recovery step, the carbon nanotube aggregates are separated from the substrates, and the substrates and the carbon nanotube aggregates are separately recovered. A recovery method is not particularly limited, and any known method can be adopted. In particular, a separation and recovery method (see, for example, WO 2019/188979) that uses an external force and a fluid flow (for example, an air vortex formed by a centrifugal force and an air flow as a drag force of the centrifugal force), as a drag force of the external force, is preferably adopted.

<Reuse Step>

In the reuse step, carbon on the recovered substrates is oxidized and removed to make the substrates reusable. A method of oxidation removal is not particularly limited, and includes, for example, heating the substrates while circulating air. By implementing such a reuse step, cost of the substrates can be reduced.

<Attribute of CNT Aggregates>

The specific surface area of the CNT aggregates obtained by the production method according to the disclosure is a value measured by the Brunauer, Emmett, and Teller method from an adsorption/desorption isotherm of liquid nitrogen at 77 K measured for the CNTs that have not been subjected to opening treatment. For example, the specific surface area of the CNT aggregates can be measured using a BET specific surface area measuring apparatus compliant with JIS Z8830. The specific surface area of the CNTs obtained in the disclosure is not particularly limited, but is preferably 600 m$^2$/g or more, preferably 800 m$^2$/g or more, preferably 2600 m$^2$/g or less, and more preferably 1400 m$^2$/g or less, for example. Furthermore, for the CNT aggregates that have been subjected to the opening treatment, the specific surface area is preferably 1300 m$^2$/g or more.

(Apparatus for Producing Carbon Nanotube Aggregates)

The apparatus for producing the carbon nanotube aggregates of the disclosure is an apparatus for producing the carbon nanotube aggregates by growing the carbon nanotube aggregates on the substrates with the catalysts on the surfaces. The apparatus for production the carbon nanotube aggregates of the disclosure includes the growth unit. The growth unit has the following components:

· the growth furnace that forms the substrate layer by stacking the substrates at the lower portion;
· the source gas injector including the plurality of gas injection ports arranged at the lower portion of the growth furnace to supply the source gas to the substrate layer; and
· the stir and conveyance unit that mechanically stirs and/or conveys the substrate layer.

The form of the apparatus for producing the carbon nanotube aggregates according to the disclosure includes "batch-type" and "continuous-type".

<Batch-type Production Apparatus>

In one embodiment, the apparatus for producing the carbon nanotube aggregates according to the disclosure may be a "batch-type" production apparatus. The "batch-type" production apparatus is a production apparatus used for the "batch-type" production method described above, in which the formation unit and the growth unit are the same unit. An example of such a "batch-type" production apparatus is illustrated in FIG. 1. A batch-type production apparatus 100 has a formation/growth unit 100a, which doubles the formation unit and the growth unit.

<<Formation/Growth Unit>>

The formation/growth unit 100a is a unit that switches and realizes the formation step and the growth step in the single unit, and is constituted of a set of devices to switch and realize the formation step and the growth step. The formation/growth unit 100a has:

(i) in the formation step, the function of creating the reducing gas environment in the environment surrounding the catalysts and heating at least one of the catalysts or the reducing gas; and
(ii) in the growth step, the function of growing the CNT aggregates by creating the source gas environment in the environment surrounding the catalysts, which have become suitable for the production of the CNT aggregates by the formation step, and heating at least one of the catalysts or the source gas.

Components that the formation/growth unit 100a may have include:

· a heating device 101;
· a formation/growth furnace 102;
· gas injection ports 103;
· a reducing gas/source gas inlet 104;
· an exhaust port 105;
· a stir and conveyance unit 106; and
· a substrate holder 108.

Normally, however, the formation/growth unit 100a does not have a furnace end opening 109, or the furnace end opening 109 is closed.

-Heating device-

The heating device 101 is a device that heats at least one of the catalysts or the reducing gas in the formation step, and heats at least one of the catalysts or the source gas in the growth step. The heating device 101 may be the same heating device or different heating devices for the formation step and the growth step. The heating device 101 is not particularly limited, and can be implemented by, for example, a resistance heater, an infrared heater, an electromagnetic induction heater, or the like. The heating device 101 can heat the inside of the system so that the temperature in the formation/growth furnace 102 is 400°C or more and 1100°C or less in the formation step, and 600°C or more and 1000°C or less in the growth step.

-Formation/Growth Furnace-

The formation/growth furnace 102 is a furnace that combines a furnace (formation furnace) that holds the reducing gas in the formation step and a furnace (growth furnace) that holds the source gas environment in the growth step.

-Gas Injection Ports-

The gas injection ports 103 are gas injection ports through which a gas is injected into the formation/growth furnace 102. The "gas" refers to the "reducing gas" in the formation step, and the "source gas" in the growth step. Since the source gas is injected from the bottom of the formation/growth furnace 102, the gas injection ports 103 for the source gas are located at the lower portion of the formation/growth furnace 102 so that the source gas can be injected from the bottom of the formation/growth furnace 102. The gas injection ports 103 for the reducing gas are preferably located at the lower portion of the formation/growth furnace 102 so that the reducing gas can be injected from the bottom of the formation/growth furnace 102. The gas injection ports 103 for the reducing gas and the source gas may be the same gas injection ports or different gas injection ports. In order to improve injection efficiency, the plurality of gas injection ports 103 is preferably arranged. By arranging the gas injection ports 103 at the lower portion of the formation/growth furnace 102, the source gas is supplied from under the substrate layer (a deposit formed by substrates 107 stacked at a lower portion of the furnace by gravity and the like), and the contact efficiency between the source gas and the catalysts is improved, thereby enabling to efficiently produce the CNT aggregates with high quality.

The total area of the gas injection ports is preferably designed so that a pressure loss generated when the gas passes through the injection ports is 1/10th to 1 times or more a pressure loss generated when the gas passes through the substrate layer formed at the lower portion in a bottom surface of the formation furnace. This makes a gas flow rate injected from each injection port uniform and stabilized, and the quality of the produced CNT aggregates and the production efficiency of the CNT aggregates can be further improved.

-Reducing Gas/Source Gas Inlet-

The reducing gas/source gas inlet 104 is a gas inlet that is connected to the gas injection ports 103 and that supplies the reducing gas and/or the source gas. When the gas injection ports 103 for the reducing gas and for the source gas are the same gas injection ports, the reducing gas/source gas inlet 104 is preferably a single gas inlet. When the gas injection ports 103 for the reducing gas and for the source gas are different gas injection ports, the reducing gas/source gas inlet 104 is constituted of a gas inlet for the reducing gas and a gas inlet for the source gas that are connected to the gas injection ports 103 for the reducing gas and the gas injection ports 103 for the source gas, respectively.

-Exhaust Port-

The exhaust port 105 is an exhaust port that discharges gases (e.g., unreacted reducing gas, source gas) in the furnace out of the system. The formation/growth unit 100a preferably includes at least one exhaust port 105, and may include a plurality of exhaust ports.

-Stir and Conveyance Unit-

The stir and conveyance unit 106 is a unit that stirs and/or conveys the substrates 107. The stir and conveyance unit 106 has the function of at least stirring the substrate layer. The stir and conveyance unit 106 may also have the function of conveying the substrates 107 from outside the formation/growth furnace 102 into the formation/growth furnace 102, and/or conveying the substrates 107 from inside the formation/growth furnace 102 out of the formation/growth furnace 102. The stir and conveyance unit 106 preferably includes a screw, a paddle, or a ribbon, or a combination of several of these, which stirs and/or conveys the substrates by rotation of a blade. For example, as illustrated in FIG. 1, in the "batch-type" production apparatus, the stir and conveyance unit 106 can be implemented by a paddle mixer. In the formation step and the growth step, it is preferable to stir the substrate layer by the stir and conveyance unit 106 while supplying the gas (reducing gas, source gas) from the gas injection ports 103 under the substrate layer. These operations improve the contact efficiency between the source gas and the catalysts, thereby enabling efficient production of the CNT aggregates with high quality.

-Substrate Holder-

The substrate holder 108 is a container that is disposed in the formation/growth furnace 102 and that contains the substrates 107 in the form of the substrate layer. When the formation/growth unit 100a has the substrate holder 108, the gas injection ports 103 are disposed at a lower portion of the substrate holder 108. The substrate layer may be stirred in the substrate holder 108 by the stir and conveyance unit 106.

<<Other Units>>

The batch-type production apparatus 100 may further include other units. The other units include a substrate introduction unit (e.g., a hopper, an inlet purge device, a front chamber), a cooling unit, and an outlet unit (e.g., an outlet purge device).

<<Operations of Batch-type Production Apparatus>>

As operations of the batch-type production apparatus 100 in the production of the carbon nanotube aggregates, the formation step and the growth step are performed by switching an atmosphere in the single furnace (formation/growth furnace). In the formation step, the reducing gas is supplied from the gas injection ports to the substrate layer, whereby the reduced gas environment is created in the environment surrounding the catalysts and at least one of the catalysts or the reducing gas is heated. In the growth step, the source gas is supplied to the substrate layer from the plurality of gas injection ports arranged at the lower portion of the formation/growth furnace, and thereby the inside of the furnace is switched to a source gas atmosphere.

Referring to FIG. 1, a flow of the gas (reducing gas, source gas) in the formation/growth unit 100a will be described. The substrates 107 are contained in the substrate holder 108 provided in the formation/growth furnace 102 to form the substrate layer. The substrate layer is stirred by the stir and conveyance unit 106. The source gas is injected through the reducing gas/source gas inlet 104 from the gas injection ports 103 disposed at the lower portion of the substrate holder 108. Since the source gas is supplied from under the substrate layer, during the stir by the stir and conveyance unit 106, the contact efficiency between the source gas and the catalysts is improved, and thereby the CNT aggregates with high quality can be efficiently produced.

«Materials of Apparatus Parts to Be Exposed to Reducing Gas or Source Gas»

Some parts of the formation/growth unit 100a and the stir and conveyance unit 106 are exposed to the reducing gas or the source gas. Materials constituting each of these components include materials capable of withstanding high temperature, for example, quartz, heat-resistant ceramics, heat-resistant alloys, and the like, and the heat-resistant alloys are preferable from the viewpoint of accuracy and flexibility of processing, and cost. The heat-resistant alloys include heat-resistant steel, stainless steel, nickel-based alloys, and the like. Those having Fe as a main component and another alloy content of 50% or less are generally referred to as the heat-resistant steel. Steel containing Fe as a main component and having another alloy content of 50% or less and Cr of approximately 12% or more is generally referred to as the stainless steel. The nickel-based alloys include alloys obtained by adding Mo, Cr, Fe, and the like to Ni. Specifically, SUS310, Inconel 600, Inconel 601, Inconel 625, Incoloy 800, MC Alloy, Haynes 230 Alloy, and the like are preferable in terms of heat resistance, mechanical strength, chemical stability, low cost, and the like.

When inner walls of the furnace and/or parts used in the furnace are made of metal, it is preferable that heat-resistant alloys are used as the materials and that surfaces are molten-aluminum plated or polished so as to have an arithmetic average roughness of Ra≤2 $\mu$m.

<Continuous Production Apparatus>

In another embodiment, the production apparatus of the carbon nanotube aggregates according to the disclosure may be the "continuous-type" production apparatus. The "continuous-type" production apparatus is a production apparatus used in the above-described "continuous-type" production method in which the formation unit and the growth unit are separate units. An example of such a "continuous-type" production apparatus is illustrated in FIG. 2. Hereinafter, the "continuous-type" production apparatus will be described with reference to FIG. 2.

Components that a continuous-type production apparatus 200 may have include, for example, the following in the order of conveying substrates 212:

· a hopper 251;
· a front chamber 252 (including an inlet purge device 201);
· a first stir and conveyance unit (for the formation step) 207 (including a first screw blade 207a and a first drive 207b)
· a connection portion 253;
· a formation unit 202 (including a formation furnace 202a, a reducing gas injector 202b, a heating device 202c, and an exhaust device 202d);
· a gas mixture prevention device 203 (including a purge gas injector 203a and an exhaust device 203b);
· a connection portion 254;
· a second stir and conveyance unit (for the growth step) 208 (including a second screw blade 208a and a second drive 208b);

· a growth unit 204 (including a growth furnace 204a, a source gas injector 204b, a heating device 204c, and an exhaust device 204d);

· a connection portion 210 (including an outlet purge device 205); and

· a cooling unit 206 (including a cooling vessel 206a and a water cooling device 206b).

«Inlet Purge Device»

The inlet purge device 201 is constituted of a set of devices to prevent outside air from entering the inside of a furnace through a substrate inlet. The inlet purge device 201 has the function of replacing an environment surrounding the substrates conveyed into the CNT aggregate production apparatus 200 with a purge gas. There are, for example, a furnace or a chamber for holding the purge gas, an injector for injecting the purge gas, and the like. An inactive gas is preferable as the purge gas, especially nitrogen is preferable in terms of safety, cost, and purgeability. A small amount of hydrogen may be contained for the purpose of improving catalytic activity. When the substrate inlet is always open, the purge gas injector is preferably implemented as a gas curtain device that is constituted of an air blowing device configured to inject the purge gas in a shower-like manner from above and below, to prevent the outside air from entering the CNT aggregate production apparatus 200 through the inlet. In an aspect illustrated in FIG. 2, the inlet purge device 201 is attached to the connection portion 253 that connects the front chamber 252, which is a component that introduces the substrates into the system through the hopper 251, to the formation furnace 202a.

<<Formation Unit>>

The formation unit 202 includes a set of devices for realizing the formation step. The formation unit 202 has the function of creating the reducing gas environment in the environment surrounding the catalysts and heating at least one of the catalysts or the reducing gas. The formation unit 202 may include, for example, the formation furnace 202a for holding the reducing gas, the reducing gas injector 202b for injecting the reducing gas, the heating device 202c for heating at least one of the catalysts or the reducing gas, the exhaust device 202d for discharging the gas in the furnace out of the system, and the like. The heating device 202c is not particularly limited, and may be implemented by, for example, a resistance heater, an infrared heater, an electromagnetic induction heater, or the like. The heating device 202c can heat the inside of the system so that the temperature in the formation furnace is 400°C or more and 1100°C or less. Furthermore, the exhaust device 202d is a component, which includes a reducing gas exhaust port disposed on a side surface of a furnace body of the formation furnace 202a, for exhausting the reducing gas in the furnace. The formation unit 202 preferably includes at least one reducing gas exhaust port, and may have more than one.

<<Growth Unit>>

The growth unit 204 includes a set of devices for realizing the growth step. The growth unit 204 has the function of creating the source gas environment in the environment surrounding the catalysts, which have become suitable for the production of the CNT aggregates by the formation step, and heating at least one of the catalysts or the source gas to grow the CNT aggregates. Specifically, the growth unit 204 may include the growth furnace 204a for holding the source gas environment, the source gas injector 204b for injecting the source gas, the heating device 204c for heating at least one of the catalysts or the source gas, the exhaust device 204d for discharging the gas in the furnace out of the system, and the like. The heating device 204c is not particularly limited, and may be implemented by, for example, a resistance heater, an infrared heater, an electromagnetic induction heater, or the like. Although not illustrated, the growth unit 204 preferably includes a catalyst activating material adding device. The exhaust device 204d is a component for exhausting the source gas in the furnace out of the system, including a source gas exhaust port disposed on a side surface of a furnace body of the growth furnace 204a. The growth unit 204 preferably includes at least one source gas exhaust port, and may have more than one.

«Catalyst Activating Material Adding Device»

The catalyst activating material adding device is constituted of a set of devices for adding a catalyst activating material into the source gas or directly adding the catalyst activating material to the environment surrounding the catalysts in a space in the growth furnace. The catalyst activating material adding device is not particularly limited in order to supply the catalyst activating material, but may include, for example, a supply system capable of performing supply by a bubbler, supply by vaporizing a solution containing a catalyst activating agent, supply by gas as it is, and supply by liquefying and vaporizing a solid catalyst activating agent. Examples of such a supply system may include vaporizers, mixers, agitators, dilutors, sprayers, pumps, compressors, and the like. Furthermore, a measurement device for catalyst activating material concentration may be installed in a supply pipe or the like for the catalyst activating material. By feedback control using this output value, the catalyst activating material can be stably supplied with little change over time.

<<Stir and Conveyance Unit>>

The (first and second) stir and conveyance units 207 and 208 are units for stirring and/or conveying the substrates 212. The stir and conveyance units may each include a screw, a paddle, or a ribbon, or a combination of several of these, which stirs and/or conveys the substrates by rotation of a blade. For example, as illustrated in FIG. 2, in the "continuous-type" production apparatus, the stir and conveyance units 207 and 208 can be implemented by screw conveyors. The screw conveyors can be implemented with (first and second) screw blades 207a and 208a, and (first and second) drives 207b and 208b such as motors that can rotate the screw blades 207a and 208a to exert substrate stirring and/or conveying capability. As illustrated in FIG. 2, the substrates 212 can be introduced into the system from outside the system through the hopper 251, for example. The vicinities of the drives 207b and 208b can be heated by the heating devices 202c and 204c, which are configured to heat the inside of the system at a lower temperature than the heating temperature in the formation unit. The diameter, winding pitch, or the like of the screw blades 207a and 208a, which constitute the screw conveyors, can be arbitrarily adjusted according to the size of the substrates 212 to be used, or the like.

The first stir and conveyance unit 207 and the second stir and conveyance unit 208 may be arranged not in parallel but at an angle. Such an angle may be, for example, 10° or less.

Here, in the embodiment illustrated in FIG. 2, the first drive 207b is disposed at the later stage of the formation unit 202, and the second drive 208b is disposed at the front stage of the growth unit 204. With this arrangement, while the connection portion between the formation unit 202 and the growth unit 204 can be fixed, the formation unit 202 and the growth unit 204 can be movably held at sides on which the drives 207b and 208b are not installed. Thus, even when heated components, such as the formation furnace 202a and the growth furnace 204a, are thermally expanded and resized, the respective end portions of these components are movably held, so that device loads caused by heat can be suppressed.

Further, by connecting and arranging the formation unit 202 and the growth unit 204 in series by the connection portion 254, as separate components vertically spaced as in the aspect illustrated in FIG. 2, the conditions in each of the formation unit 202 and the growth unit 204 can be easily optimized. Thus, the quality of the obtained CNT aggregates and the production efficiency of the CNT aggregates can be more enhanced.

«Gas Mixture Prevention Device»

The gas mixture prevention device 203 is installed in the connection portion 254 that spatially connects the formation unit 202 and the growth unit 204 to each other. The gas mixture prevention device 203 is constituted of a set of devices for realizing the function of preventing the gases from being mixed into the furnace spaces of the formation unit 202 and the growth unit 204. The gas mixture prevention device 203 is not particularly limited, and can be implemented by a gate valve device or rotary valve device that can mechanically block the spatial connection of each unit at times other than during the transfer of the substrates from unit to unit, a gas curtain device constituted of an air blowing device configured to inject the purge gas, an exhaust device that exhausts the gases present inside the connection portion 254, inside the formation unit 202 in the vicinity of the connection portion 254, and inside the growth unit 204 in the vicinity of the connection portion 254 out of the system, or the like. In particular, it is preferable that the gas mixture prevention device 203 has the exhaust device 203b that sucks at least one of the reducing gas flowing in from the formation unit 202 or the source gas flowing in from the growth unit 204, and exhausts the reducing gas or the source gas out of the CNT aggregate production apparatus 200. Furthermore, it is preferable that the gas mixture prevention device 203 has, in addition to the exhaust device 203b, the purge gas injector 203a that injects the purge gas (sealing gas) along an opening surface of the connection portion 254, and the exhaust device 203b sucks the purge gas and exhausts the purge gas out of the production apparatus. According to the CNT aggregate production apparatus 200 having such a configuration, the reduction of the catalysts in the formation step is less likely to be inhibited, and the quality of the obtained CNT aggregates and the production efficiency of the CNT aggregates can be further improved. In addition, the screw conveyors, which are the stir and conveyance units 207 and 208, rectify the flows of gases in the furnace space into flows along the screw blades 207a and 208a, thereby suppressing diffusion of the gases by suction and/or injection by the gas mixture prevention device 203 and further improving a gas mixture prevention effect. These can also be used in combination with the gate valve device and/or the rotary valve device.

«Cooling Unit»

The cooling unit 206 is constituted of a set of devices required to cool the substrates on which the CNT aggregates have grown. The cooling unit 206 has the function of preventing oxidation and cooling the CNT aggregates, the catalysts, and the substrates after the growth step in the growth unit 204. The cooling unit 206 illustrated in FIG. 2 includes the cooling vessel 206a for holding the inactive gas, and the water cooling device 206b arranged to surround the inner space of the cooling vessel 206a. When the cooling unit is an air cooling type, not in the aspect illustrated in the figure, the cooling unit can include an injector or the like to inject the inactive gas into the inner space of the cooling vessel. In the illustrated aspect, the cooling vessel 206a is connected to the growth furnace 204a via the connection portion 210.

<<Connection Portions>>

As described above, the front chamber 252, the formation furnace 202a, the growth furnace 204a, and the cooling vessel 206a are spatially connected to each other by the connection portions 253, 254, and 210. In other words, the connection portions 253, 254, and 210 are a set of devices for spatially connecting the furnace space of each unit and preventing the substrates 212 from being exposed to the outside air when the substrates 212 are conveyed from unit to unit. The connection portions 253, 254, and 210 include, for example, furnaces, chambers, or the like that can block the environment surrounding the substrates from the outside air and allow the substrates 212 to pass from unit to unit. For example, the material of the connection portions 253, 254, and 210 may be Inconel 601.

In the embodiment illustrated in FIG. 2, the connection portion 254 connects the formation unit 202 and the growth unit 204 in series, which are arranged as vertically spaced separate components. The connection portion 254 includes a first connection tube 254a connected to the later stage of the formation furnace 202a, a second connection tube 254b connected to the front stage of the growth furnace 204a, and a coupling tube 254c vertically coupling between the first connection tube 254a and the second connection tube 254b. These tubes preferably include a heating device to keep the substrates 212 inside warm. As illustrated in FIG. 2, the first connection tube 254a is provided with the purge gas injector 203a, and the coupling tube 254c is provided with the exhaust device 203b. The purge gas injector 203a is also provided in the vicinity of an inlet of the growth furnace 204a. These work together to constitute the gas mixture prevention device 203.

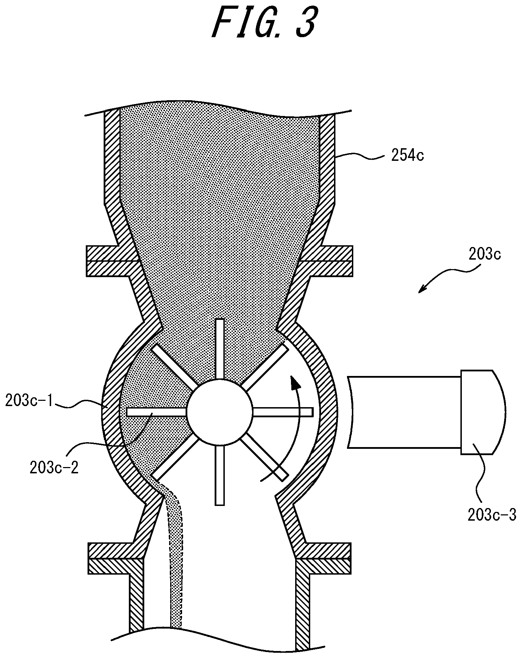

Here, as illustrated in FIG. 3, the coupling tube 254c may be provided with a rotary valve device 203c. The rotary valve device 203c includes a rotary valve case 203c-1, a rotary valve 203c-2, and a rotary valve driver 203c-3 that drives the rotary valve 203c-2. The rotation of the rotary valve 203c-2 controls the movement of the substrates 212. This control is combined with the control of an air flow by the purge gas injector 203a and the exhaust device 203b, so that the atmosphere between the formation step and the growth step can be separated more favorably. As a result, the quality of the obtained CNT aggregates and the production efficiency of the CNT aggregates can be enhanced.

«Outlet purge device»

The outlet purge device 205 is constituted of a set of devices for preventing the outside air from entering the furnace through a substrate outlet. The outlet purge device 205 has the function of creating a purge gas environment in the environment surrounding the substrates 212. Specifically, the outlet purge device 205 may be implemented by a furnace or a chamber for holding the purge gas environment, an injector for injecting the purge gas, and the like. The purge gas is preferably an inactive gas, and especially nitrogen is preferable in terms of safety, cost, and purgeability. When the substrate outlet is always open, a gas curtain device that injects the purge gas in a shower-like manner from above and below is preferably provided as the purge gas injector, to prevent the outside air from entering through the apparatus outlet.

<<Injectors for Reducing Gas, Source Gas, and Catalyst Activating Material>>

As the reducing gas injector 202b, the source gas injector 204b, and an injector for the catalyst activating material, a plurality of injection ports is provided. For example, a plurality of nozzles is provided from walls of the formation furnace and/or the growth furnace toward the center of the screw. A single or plurality of injection ports may be provided at a tip of each nozzle. Alternatively, the tip of the nozzle may be pinned out and a plurality of injection ports may be provided on a side surface and/or a tip of each pin. In such a case, the screw blade needs to have notches to avoid interference with the pins.

When a plurality of injection ports is provided as the reducing gas injector 202b in this manner, the reducing gas can be spread uniformly on the substrates, and the catalysts can be reduced efficiently. As a result, the uniformity of the CNT aggregates grown on the substrates can be improved and the consumption of the reducing gas can be reduced.

When a plurality of injection ports is provided as the source gas injector 204b in this manner, the source gas can be spread uniformly on the substrates, and the source gas can be consumed efficiently. As a result, the uniformity of the aligned CNT aggregates grown on the substrates can be improved and the consumption of the source gas can be reduced.

When a plurality of injection ports is provided as an injector for the catalyst activating material in this manner, the catalyst activating material can be spread uniformly on the substrates. This increases catalytic activity and extends the life of the catalysts, thus allowing the growth of aligned CNTs to continue for a long time. The same is true when the catalyst activating material is added to the source gas and a shower head is used as the injector.

«Materials of Apparatus Parts to Be Exposed to Reducing Gas or Source Gas»

Some parts of the formation unit 202, the growth unit 204, the stir and conveyance units 207 and 208, the gas mixture prevention device 203, and the connection portions 253, 254, and 210 are exposed to the reducing gas or the source gas. Materials constituting each of these components include materials capable of withstanding high temperature, for example, quartz, heat-resistant ceramics, heat-resistant alloys, and the like, and the heat-resistant alloys are preferable from the viewpoint of accuracy and flexibility of processing, and cost. The heat-resistant alloys include heat-resistant steel, stainless steel, nickel-based alloys, and the like. Those having Fe as a main component and another alloy content of 50% or less are generally referred to as the heat-resistant steel. Steel containing Fe as a main component and having another alloy content of 50% or less and Cr of approximately 12% or more is generally referred to as the stainless steel. The nickel-based alloys include alloys obtained by adding Mo, Cr, Fe, and the like to Ni. Specifically, SUS310, Inconel 600, Inconel 601, Inconel 625, Incoloy 800, MC Alloy, Haynes 230 Alloy, and the like are preferable in terms of heat resistance, mechanical strength, chemical stability, low cost, and the like.

When inner walls of the furnace and/or parts used in the furnace are made of metal, it is preferable that materials are heat-resistant alloys and surfaces are molten-aluminum plated or polished so as to have an arithmetic average roughness of Ra$\leq$2 $\mu$m.

EXAMPLES

The method and the apparatus for producing the carbon nanotube (CNT) aggregates according to the disclosure will be described in detail with specific examples below, but the disclosure is not limited to these examples.

[Example 1: Batch-type CNT Production]

FIG. 1 illustrates a diagram of a (batch-type) production apparatus according to this example. The batch-type production apparatus 100 was constituted of the formation/growth unit 100a that included the heating device 101, the formation/growth furnace 102, the gas injection ports 103, the reducing gas/source gas inlet 104, the exhaust port 105, the paddle mixer 106, the substrates 107, and the substrate holder 108, and that had the closed furnace end opening 109. The formation/growth furnace was made of quartz, and the paddle mixer and the substrate holder were made of Inconel 601.

Zirconia (zirconium dioxide) beads (ZrO$_2$, volume-average particle diameter D50: 650 $\mu$m) as the substrates were placed in a rotary drum coating apparatus. While the zirconia beads were stirred (20 rpm), a solution containing aluminum was sprayed (a spray volume 3 g/minute, spray time of 940 seconds, spray pressure of 10 MPa) with a spray gun, and was dried by supplying compressed air (300 L/minute) into the rotary drum to form aluminum-containing coating films on the zirconia beads. Next, the zirconia beads with the the aluminum-containing coating films were sintered at 480°C for 45 minutes to produce primary catalyst particles with aluminum oxide layers. Furthermore, while the primary catalyst particles were placed in another rotary drum coating apparatus and stirred (20 rpm), an iron catalyst solution was sprayed (a spray volume 2 g/minute, spray time of 280 seconds, spray pressure of 5 MPa) with a spray gun, and was dried by supplying compressed air (300 L/minute) into the rotary drum to form iron-containing coating films on the primary catalyst particles. Next, the primary catalyst particles with the iron-containing coating films were sintered at 220°C for 20 minutes to produce the substrates with iron oxide layers.

The substrates having the catalysts on surfaces, which were prepared in this manner, were stacked in the substrate holder of the production apparatus. While respective process gases were injected from the plurality of gas injection ports arranged on a bottom surface of the substrate holder, the substrates were subjected to the formation step, the growth step, and the cooling step in this order to produce CNT aggregates.

The conditions of each step were set as follows.
Amount of substrates: 100 g

Formation step

· Setting temperature: 800°C
· Reducing gas: nitrogen 0.05 sLm and hydrogen 0.45 sLm
· Paddle mixer: 3 rpm
· Processing time :30 minutes

Growth step

· Setting temperature: 800°C
· Source gas: nitrogen 0.325 sLm, ethylene 0.1 sLm, carbon dioxide 0.025 sLm, and hydrogen 0.05 sLm
· Paddle mixer: 3 rpm
· Processing time : 10 minutes

Cooling step

· Cooling temperature: room temperature
· Purge gas: nitrogen 2 sLm

CNTs synthesized on the substrates were separated and recovered using a forced vortex classifier (rotation speed: 1600 rpm, air flow rate: 2.5 $Nm^3$/minute). The average recovery rate of the CNT aggregates was approximately 98%.

The characteristics of the CNT aggregates produced according to this example were, as typical values, tap bulk density: 0.006 g/$cm^3$, average CNT length: 200 $\mu$m, BET-specific surface area: 900 $m^2$/g, average outer diameter: 4.0 nm, carbon purity: 99%, CNT yield: 6 mg/g-beads, and carbon conversion efficiency: 56%.

It has been demonstrated that the apparatus according to the disclosure can produce the long CNT aggregates with high specific surface area with high carbon conversion efficiency.

[Example 2: Continuous-type CNT Production]

FIG. 2 illustrates a diagram of a (continuous-type) production apparatus according to this example. The CNT aggregate production apparatus 200 was constituted of the inlet purge device 201, the formation unit 202, the gas mixture prevention device 203, the growth unit 204, the outlet purge device 205, the cooling unit 206, the first stir and conveyance unit (for formation) 207, the second stir and conveyance unit (for growth) 208, and the connection portions 210, 253, and 254. Inconel 601 was used as a material for the furnaces and the gas injectors of the formation/growth units, an exhaust section of the gas mixture prevention means, the screw conveyors, each purge section, and the connection portions.

The catalyst-bearing supports prepared as in Example 1 were fed into the feeder hopper of the production apparatus. The catalyst-bearing supports were subjected to the formation step, the growth step, and the cooling step in this order, while being stirred and conveyed with the screw conveyors, to produce CNT aggregates.

Each condition of the inlet purge section, the formation unit, the gas mixture prevention means, the growth unit, the output purge section, and the cooling unit of the production apparatus was set as follows.

Feed rate: 7.5 kg/h
Inlet purge section 201

· Purge gas: nitrogen 40 sLm

Formation unit 202

· Temperature in furnace: 800°C
· Reducing gas: nitrogen 3 sLm and hydrogen 27 sLm
· Processing time :30 minutes

Gas mixture prevention means 203

· Purge gas injector 203a: 40 sLm
· Exhaustion amount of exhaust section 203b: 40 sLm

Growth unit 204

· Temperature in furnace: 830°C
· Source gas: nitrogen 15.4 sLm, ethylene 4.8 sLm, carbon dioxide 1.4 sLm, and hydrogen 2.4 sLm
· Processing time :15 minutes

Outlet purge section 205

· Purge gas: nitrogen 45 sLm

Cooling unit 206

· Cooling temperature: room temperature

Continuous production was performed under the above conditions.

CNTs synthesized on the substrates were separated and recovered using a forced vortex classifier (rotation speed: 1600 rpm, air flow rate: 2.5 $Nm^3$/minute). The average recovery rate of the CNT aggregates was approximately 98%.

The characteristics of the CNT aggregates produced according to this example were, as typical values, tap bulk density: 0.006 $g/cm^3$, average CNT length: 200 $\mu$m, BET-specific surface area: 800 $m^2$/g, average outer diameter: 4.0 nm, carbon purity: 99%, CNT yield: 6 mg/g-beads, and carbon conversion efficiency: 15%. The results of the continuous production are depicted in Table 1.

[Table 1]

| Sampling No. | 1 | 300 |
|---|---|---|
| Yield (mg/g-beads) | 6.0 | 6.2 |
| G/D ratio | 2.0 | 1.9 |
| Average CNT length ($\mu$m) | 225 | 230 |
| BET-specific surface area ($m^2$/g) | 803 | 792 |
| Carbon conversion efficiency [%] | 14.6 | 15.1 |

Sampling was performed every hour. Comparing the first and 300th sampling, no phenomenon of decrease in production volume and deterioration in the quality of the CNT aggregates could be observed.

It has been demonstrated that the apparatus according to the disclosure can continuously produce the long CNT aggregates with high specific surface area with high efficiency, without causing decrease in production volume or deterioration in quality during continuous production.

[Example 3: Reuse of Catalysts]

3 kg of the catalyst-bearing supports used to produce the CNT aggregates in Example 2 were recovered and oxidized in a rotary kiln furnace (air atmosphere, temperature: 800°C, processing time: 30 minutes) to remove carbon adhered to the surfaces of the catalyst-bearing supports in a reuse step. The catalyst-bearing supports after the reuse step were subjected to each step in the same manner as in Example 2 to produce CNT aggregates.

As compared to Example 2, the characteristics of the CNT aggregates produced according to this example were similar, except that the yield was reduced to 4.7 mg/g-beads by approximately 80%.

It has been demonstrated that the production method according to the disclosure can produce the long CNT aggregates with high specific surface area by reusing the catalyst-bearing supports.

(Validation Example)

Using the same catalyst substrate particles and production apparatus as in Example 1, CNT aggregates were attempted to be produced under the same conditions as in Example 1, except that the reduction/source gases in the formation/growth steps were introduced through the furnace end opening 109, instead of being injected through the plurality of gas injection ports arranged on the bottom surface of the substrate holder, and the paddle mixer was not rotated.

As a result, the CNT aggregates grew only in the vicinity of a top surface of the substrate layer, and no CNT aggregates grew inside the substrate layer, thus resulting in decrease to an average CNT yield for the entire substrate layer: 1 mg/g-beads and to a carbon conversion efficiency: approximately 2.5%.

This indicates that in the production of the CNT aggregates, it is required to inject the source gas from under the substrate layer and to mechanically stir the substrate layer at least in an overlapping manner, in order to improve the production efficiency and the carbon conversion efficiency.

INDUSTRIAL APPLICABILITY

According to the disclosure, the contact efficiency between the source gas and the catalysts is improved, thereby enabling efficient production of the CNT aggregates with high quality.

REFERENCE SIGNS LIST

| | |
|---|---|
| 100 | CNT aggregate production apparatus (batch-type production apparatus) |
| 100a | formation/growth unit |
| 101 | heating device |
| 102 | formation/growth furnace |
| 103 | gas injection ports |
| 104 | reducing gas/source gas inlet |
| 105 | exhaust port |
| 106 | stir and conveyance unit (paddle mixer) |
| 107 | substrates |
| 108 | substrate holder |
| 109 | furnace end opening |
| 200 | CNT aggregate production apparatus (continuous-type production apparatus) |
| 201 | inlet purge device |
| 202 | formation unit |
| 202a | formation furnace |
| 202b | reducing gas injector |
| 202c | heating device |
| 202d | exhaust device |
| 203 | gas mixture prevention device |
| 203a | purge gas injector |
| 203b | exhaust device |
| 204 | growth unit |
| 204a | growth furnace |
| 204b | source gas injector |
| 204c | heating device |
| 204d | exhaust device |
| 205 | outlet purge device |
| 206 | cooling unit |
| 206a | cooling vessel |
| 206b | water cooling device |
| 207 | first stir and conveyance unit (for formation step) |
| 207a | first screw blade |
| 207b | first drive |
| 208 | second stir and conveyance unit (for growth step) |
| 208a | second screw blade |
| 208b | second drive |
| 210, 253, 254 | connection portion |
| 212 | substrates |
| 251 | hopper |

EP 4 306 483 A1

| 252 | front chamber |
| 254a | first connection tube |
| 254b | second connection tube |
| 254c | coupling tube |
| 203c | rotary valve device |
| 203c-1 | rotary valve case |
| 203c-2 | rotary valve |
| 203c-3 | rotary valve driver |

**Claims**

1. A method for producing carbon nanotube aggregates, the method comprising growing the carbon nanotube aggregates on substrates with catalysts on surfaces,
   wherein

   in the growing,

   forming a substrate layer by stacking the substrates at a lower portion of a growth furnace configured to perform the growing, and supplying a source gas to the substrate layer through a plurality of gas injection ports arranged at the lower portion of the growth furnace, and
   mechanically stirring and/or conveying the substrate layer in the growth furnace

   are performed at least in part in an overlapping manner.

2. The method for producing the carbon nanotube aggregates according to claim 1, the method comprising performing, before the growing, formation comprising creating a reducing gas environment in an environment surrounding the catalysts and heating at least one of the catalysts or a reducing gas,
   wherein

   in the formation,

   forming a substrate layer by stacking the substrates at a lower portion of a formation furnace configured to perform the formation, and supplying the reducing gas to the substrate layer through a plurality of gas injection ports arranged at the lower portion of the formation furnace, and
   mechanically stirring and/or conveying the substrate layer in the formation furnace

   are performed at least in part in an overlapping manner,
   the formation furnace and the growth furnace are a same furnace, and the formation and the growing are performed in the same furnace with switching an atmosphere in the furnace.

3. The method for producing the carbon nanotube aggregates according to claim 1, the method comprising performing formation and the growing with prevention of mixing gas environments in the formation and in the growing with each other, while continuously conveying the substrates,
   with use of a production apparatus comprising:

   a formation unit configured to realize the formation comprising creating a reducing gas environment in an environment surrounding the catalysts and heating at least one of the catalysts or a reducing gas;
   a growth unit configured to realize the growing comprising creating a source gas environment in the environment surrounding the catalysts and heating at least one of the catalysts or the source gas to grow the carbon nanotube aggregates;
   a connection portion configured to spatially connect between an inside space of a furnace of the formation unit and an inside space of a furnace of the growth unit;
   a first stir and conveyance unit configured to stir and/or convey the substrates in the inside space of the furnace of the formation unit, and a second stir and conveyance unit configured to stir and/or convey the substrates in the inside space of the furnace of the growth unit, the first and second stir and conveyance units configured as a single common unit and/or separate units; and
   a gas mixture prevention device configured to prevent the gases from mixing with each other between the inside

21

space of the furnace the formation unit and the inside space of the furnace of the growth unit.

4. The method for producing the carbon nanotube aggregates according to any one of claims 1 to 3, wherein in the stirring and/or conveying in the growth furnace, mechanical stir and/or conveyance are/is performed by rotation of a blade of a screw, a paddle, or a ribbon, or a combination of several of these.

5. The method for producing the carbon nanotube aggregates according to any one of claims 1 to 4, wherein the source gas environment in the growing is an environment of high carbon concentration and contains a catalyst activating material.

6. The method for producing the carbon nanotube aggregates according to claim 5, wherein the source gas environment contains ethylene and carbon dioxide as the catalyst activating material.

7. The method for producing the carbon nanotube aggregates according to any one of claims 1 to 6, wherein each of the substrates is a particle with an apparent density of 2.0 g/cm$^3$ or more.

8. The method for producing the carbon nanotube aggregates according to any one of claims 1 to 7, wherein each of the substrates contains any one or more elements of Al, Si, and Zr.

9. The method for producing the carbon nanotube aggregates according to any one of claims 1 to 8, the method comprising:

forming a catalyst layer on each of the substrates;
separating each of the carbon nanotube aggregates from each of the substrates and recovering the substrates and the carbon nanotube aggregates separately; and
making the substrates reusable by oxidation removal of carbon on the recovered substrates.

10. An apparatus for producing carbon nanotube aggregates by growing the carbon nanotube aggregates on substrates with catalysts on surfaces, the apparatus comprising a growth unit comprising:

a growth furnace configured to form a substrate layer by stacking the substrates at a lower portion;
a source gas injector including a plurality of gas injection ports arranged at the lower portion of the growth furnace, a source gas being supplied to the substrate layer through the gas injection ports; and
a stir and conveyance unit configured to mechanically stir and/or convey the substrate layer.

11. The apparatus for producing the carbon nanotube aggregates according to claim 10, the apparatus configured to perform a formation step and a growth step in a single furnace while switching an atmosphere in the furnace, wherein

the growth furnace is a formation/growth furnace configured to be able to perform the formation step and the growth step in the single furnace while switching the atmosphere in the furnace,
the growth unit is a formation/growth unit configured to be able to perform the formation step and the growth step,
the formation/growth unit has a reducing gas injector including a gas injection port disposed in the formation/growth furnace, a reducing gas being supplied to the substrate layer through the gas injection port,
the reducing gas injector is a gas injector that is same as or different from the source gas injector,
the formation step is a step of creating a reducing gas environment in an environment surrounding the catalysts by supplying the reducing gas through the gas injection port, and heating at least one of the catalysts or the reducing gas, and
the growth step is a step of switching an inside of the furnace to a source gas environment by supplying the source gas to the substrate layer through a plurality of gas injection ports arranged at a lower portion of the formation/growth furnace.

12. The apparatus for producing the carbon nanotube aggregates according to claim 10, the apparatus comprising:

a formation unit configured to realize a formation step in which a reducing gas environment is created in an environment surrounding the catalysts and at least one of the catalysts or a reducing gas is heated;
the growth unit configured to realize a growth step in which a source gas environment is created in the environment surrounding the catalysts and at least one of the catalysts or the source gas is heated to grow the carbon nanotube aggregates;

a connection portion configured to spatially connect between an inside space of a furnace of the formation unit and an inside space of a furnace of the growth unit;

a first stir and conveyance unit configured to stir and/or convey the substrates in the inside space of the furnace of the formation unit, and a second stir and conveyance unit configured to stir and/or convey the substrates in the inside space of the furnace of the growth unit, the first and second stir and conveyance units configured as a single common unit and/or separate units; and

a gas mixture prevention device configured to prevent the gases from mixing with each other between the inside space of the furnace the formation unit and the inside space of the furnace of the growth unit.

**13.** The apparatus for producing the carbon nanotube aggregates according to any one of claims 10 to 12 or claim 10, wherein the stir and conveyance unit comprises a screw, a paddle, or a ribbon, or a combination of several of these that is configured to stir and/or convey the substrates by rotation of a blade.

FIG. 1

FIG. 2

# FIG. 3

**EP 4 306 483 A1**

| INTERNATIONAL SEARCH REPORT | International application No. |
|---|---|
| | **PCT/JP2022/005724** |

**A. CLASSIFICATION OF SUBJECT MATTER**

*C01B 32/16*(2017.01)i; *B01J 23/745*(2006.01)i; *B01J 29/90*(2006.01)i; *B82Y 40/00*(2011.01)i; *C01B 32/164*(2017.01)i
FI: C01B32/16; C01B32/164; B01J23/745 M; B01J29/90 M; B82Y40/00

According to International Patent Classification (IPC) or to both national classification and IPC

**B. FIELDS SEARCHED**

Minimum documentation searched (classification system followed by classification symbols)
C01B32/16; B01J23/745; B01J29/90; B82Y40/00; C01B32/164

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-140266 A (NATIONAL INSTITUTE OF ADVANCED INDUSTRIAL SCIENCE AND TECHNOLOGY) 26 July 2012 (2012-07-26) claim 1, paragraphs [0054], [0058], [0084], [0099], [0101], [0119], [0121] | 1-2, 5-8, 10-11 |
| Y | claim 1, paragraphs [0054], [0058], [0084], [0099], [0101], [0119], [0121] | 3-4, 9, 12-13 |
| Y | JP 2017-165617 A (ZEON CORP.) 21 September 2017 (2017-09-21) paragraphs [0048], [0105] | 3, 9, 12 |
| Y | JP 2011-116656 A (NATIONAL UNIVERSITY CORPORATION KITAMI INSTITUTE OF TECHNOLOGY) 16 June 2011 (2011-06-16) paragraph [0023] | 4, 13 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | |  |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 March 2022** | **22 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

<table>
<tr><td colspan="2" align="center"><b>INTERNATIONAL SEARCH REPORT</b><br>Information on patent family members</td><td colspan="2">International application No.<br><br><b>PCT/JP2022/005724</b></td></tr>
<tr><td>Patent document<br>cited in search report</td><td>Publication date<br>(day/month/year)</td><td>Patent family member(s)</td><td>Publication date<br>(day/month/year)</td></tr>
<tr><td>JP 2012-140266 A</td><td>26 July 2012</td><td>(Family: none)</td><td></td></tr>
<tr><td>JP 2017-165617 A</td><td>21 September 2017</td><td>(Family: none)</td><td></td></tr>
<tr><td>JP 2011-116656 A</td><td>16 June 2011</td><td>(Family: none)</td><td></td></tr>
</table>

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5285730 B
- JP 2011241104 A
- WO 2019188979 A